# FASCICULE DE BREVET EUROPEEN

(11) **EP 4 690 353 B1**
(45) Date de publication et mention de la délivrance du brevet: **02.12.2026**
(21) Numéro de dépôt: 25729366.2
(22) Date de dépôt: 29.05.2025
(51) Int. Cl.: H01M 50/105, H01M 50/178, H01M 50/202, H01M 50/249, H01M 50/545, H01M 50/548, H01M 50/557, H01M 50/22, H01M 50/224, H01M 50/296, H01M 50/244, H01M 10/658

(54) **CELLULE ÉLECTROCHIMIQUE POUR BATTERIE ÉLECTRIQUE ET BATTERIE ÉLECTRIQUE POUR VÉHICULE ÉLECTRIQUE**
ELEKTROCHEMISCHE ZELLE FÜR EINE ELEKTRISCHE BATTERIE UND ELEKTRISCHE BATTERIE FÜR EIN ELEKTROFAHRZEUG
ELECTROCHEMICAL CELL FOR AN ELECTRIC BATTERY AND ELECTRIC BATTERY FOR AN ELECTRIC VEHICLE

(30) Priorité: 10.06.2024 FR 2406134
(43) Date de publication de la demande: 11.02.2026
(73) Titulaire: Verkor, 38000 Grenoble (FR)
(72) Inventeur: BERLUREAU, Thierry, 38000 Grenoble (FR)
(74) Mandataire: Novagraaf Group
(86) Numéro de dépôt international: PCT/IB2025/055550
(87) Numéro de publication internationale: WO 2025/257651

(56) Documents cités:
- DE-A1- 102011 109 218
- DE-A1- 102014 204 245

## Description

### Domaine technique de l'invention

L'invention concerne le domaine des batteries électriques pour véhicule automobile électrique. En particulier l'invention concerne des cellules de batteries électriques. De façon plus précise, l'invention a trait aux cellules électriques comprenant un assemblage d'électrodes enveloppé dans un sachet souple et munis d'une coque extérieure rigide. L'invention concerne en outre des batteries pour véhicules électriques comprenant de telles cellules électriques.

### Arrière-plan technique

Les véhicules automobiles électriques sont équipés de batteries électriques permettant d'apporter l'énergie nécessaire à la propulsion.

Ces batteries électriques comprennent plusieurs modules électriques lesquels comportent des cellules électriques. A l'intérieur d'un module donné, les cellules électriques sont interconnectées électriquement entre elles. Les modules électriques sont interconnectés électriquement et forment ensemble avec d'autres éléments électriques la batterie du véhicule électrique.

Les connections électriques sont réalisées à l'aide de pièces métalliques rapportées, connues sous l'expression anglo-saxonne « busbar ». Ces connexions électriques sont obtenues par soudage des pièces métalliques sur les cellules à l'échelle du module, et entre modules à l'échelle de la batterie électrique.

Les modules présentent une forme sensiblement parallélépipédique. Ce sont des boites métalliques dans lesquelles sont agencées les cellules électriques interconnectées électriquement entre elles.

Le document DE102014204245A décrit une unité d'accumulation d'énergie comprenant une pluralité de cellules galvaniques.

Bien que l'architecture des batteries de véhicules automobiles donne globalement satisfaction, elle demeure perfectible.

En effet, les modules complexifient significativement cette architecture.

Un inconvénient des modules est qu'ils alourdissent la batterie en raison des nombreuses pièces métalliques qu'ils contiennent, ce qui rend le véhicule plus énergivore et grève les performances des véhicules électriques.

Un autre inconvénient des modules est qu'ils réduisent le volume disponible pour d'éventuelles cellules supplémentaires, ce qui réduit la puissance de la batterie du véhicule électrique.

Un autre inconvénient des modules est qu'ils augmentent le coût de fabrication de la batterie et par conséquent du véhicule électrique.

Un autre inconvénient de l'architecture actuelle des batterie électriques est qu'elles sont particulièrement fastidieuses à assembler en raison du nombre de soudures nécessaires pour fabriquer chaque module d'une part et pour assembler les modules ensemble d'autre part, ce qui augmente les temps de fabrication et augmente le coût du véhicule électrique.

Un autre inconvénient de l'architecture actuelle des batteries électriques est le faible niveau de réparabilité de celles-ci. En effet, lorsqu'une cellule est défectueuse, le module qui la contient doit être remplacé.

Un autre inconvénient de l'architecture actuelle des batteries électriques réside dans la difficulté du recyclage. Les modules, qui comprennent de nombreuses pièces métalliques soudées, ne permettent pas un recyclage rapide et peu onéreux pour atteindre des taux de pureté élevés. Afin d'atteindre ces taux de pureté élevés, des procédés de recyclage complexes et donc onéreux sont utilisés.

L'invention vise à améliorer les batteries électriques équipées de cellules en sachet souple.

### Résumé de l'invention

A cet effet, il est proposé en premier lieu une cellule électrique comprenant :
- un sachet souple hermétique,
- une pluralité d'électrodes positives et négatives séparées les unes des autres par un film séparateur poreux de sorte à former un empilage d'électrodes, ledit empilage d'électrode étant enveloppé dans le sachet souple,
- un électrolyte agencé dans le sachet souple,
- un premier terminal connecté aux électrodes positives et un deuxième terminal connecté aux électrodes négatives, lesdits premier et deuxième terminaux faisant saillie du sachet souple, la cellule comprenant une coque extérieure rigide dans laquelle est agencé le sachet souple, ladite coque extérieure comprenant :
- une première partie et une deuxième partie distincte de la première partie, la première partie comprenant une première paroi principale et une première jupe formant un angle avec la première paroi principale, la deuxième partie comprenant une deuxième paroi principale et une deuxième jupe formant un angle avec la deuxième paroi principale;
- une première portion métallique connectée au premier terminal, cette première portion métallique étant agencée sur ladite première paroi principale ;
- une deuxième portion métallique connectée au deuxième terminal, cette deuxième portion métallique étant agencée sur ladite deuxième paroi principale;
cellule dans laquelle chacune de la première jupe et de la deuxième jupe est fabriquée dans un matériau isolant électriquement de sorte que la première portion métallique et la deuxième portion métallique soient isolées électriquement l'une de l'autre.

Les cellules peuvent être directement agencées dans une batterie, les unes à côté des autres. Grâce aux terminaux les cellules sont interconnectées peuvent être interconnectées entre elles dans une batterie. Ainsi il n'est plus nécessaire d'utiliser des éléments métalliques rapportés pour interconnecter les cellules. Il peut y avoir une exception pour les cellules qui se situent à des extrémités de la batterie.

Ainsi cette cellule permet de s'affranchir des modules.

La coque extérieure rigide permet de protéger le sachet souple et confère des dimensions précises à la cellule ce qui facilite la fabrication de la batterie. De plus la coque extérieure confère de la rigidité structurelle à la batterie électrique et donc à la voiture électrique. En effet, la batterie électrique fait en général partie intégrante du châssis du véhicule électrique et participe à la tenue mécanique de la structure.

La batterie est plus légère, un plus grand nombre de cellules peuvent être agencées dans celle-ci, la batterie est plus facile à fabriquer notamment en réduisant le nombre d'opérations et la performance globale de la batterie et du véhicule sont améliorés. Le coût de fabrication est par ailleurs réduit.

En outre, lorsqu'une cellule est défectueuse, il est plus simple de ne remplacer que ladite cellule défectueuse.

Par ailleurs le recyclage est amélioré, car le nombre de soudures susceptibles de provoquer des mélanges de métaux est significativement réduit. Ce recyclage facilité permet en plus d'obtenir des taux de pureté plus élevés.

Diverses caractéristiques supplémentaires peuvent être prévues seules ou en combinaison :
- les électrodes sont distinctes les unes des autres et lesdites électrodes sont séparées les unes des autres par un film séparateur poreux, lesdites électrodes étant empilées selon un axe d'empilement ;
- l'empilage d'électrodes présente une forme sensiblement parallélépipédique, ledit empilage ayant une première face et une deuxième face opposée à la première face et quatre tranches latérales reliant la première face à la deuxième face et qui s'étendent latéralement selon l'axe d'empilage, lesdites première et deuxième face présentant chacune une surface supérieure à la surface de chacune des tranches prises individuellement, le premier terminal faisant saillie d'une première tranche et le deuxième terminal faisant saillie d'une deuxième tranche opposée à la première tranche, cellule dans laquelle la première portion métallique est agencée en regard de la première face et la deuxième portion métallique est agencée en regard de la deuxième face ;
- la coque extérieure comporte un logement dans lequel est agencé l'empilage d'électrodes ;
- la première partie comprend des premiers moyens de fixation,
- la deuxième partie comprend des deuxièmes moyens de fixation destinés à coopérer avec les premiers moyens de fixation de sorte à encapsuler le sachet souple comprenant l'empilage d'électrodes ;
- la première partie et la deuxième partie de la coque extérieure présentent en section sensiblement une forme de U ou de V à fond plat ;
- la première jupe comporte les premiers moyens de fixation et la deuxième jupe comporte les deuxièmes moyens de fixation ;
- la cellule comprend une pâte thermique agencée dans un premier espace situé entre une tranche et la coque extérieure, ladite pâte thermique étant en contact avec ladite au moins une tranche et ladite coque extérieure ;
- les tranches de l'empilage d'électrodes sont agencées sensiblement en regard de la première et la deuxième jupe de la coque extérieure ;
- chacune de la première jupe et de la deuxième jupe est fabriquée dans un matériau conducteur thermique ;
- la jupe et la paroi principale respectivement de la première partie et de la deuxième partie sont fabriquées d'un seul tenant ;
- la première partie et la deuxième partie de la coque extérieure sont fabriquées par surmoulage respectivement sur la première portion métallique et sur la deuxième portion métallique ;
- la cellule comprend un élément isolant thermique agencé à l'intérieur de la coque extérieure, ledit élément isolant thermique étant apte à isoler thermiquement le sachet souple de la coque extérieure ;
- l'élément isolant thermique est agencé entre au moins une paroi principale et le sachet souple.

Il est proposé en deuxième lieu une batterie électrique comprenant une pluralité de cellules telles que précédemment décrites, lesdites cellules étant agencées les unes à côté des autres de sorte que la première portion métallique d'une cellule donnée est en contact direct avec la deuxième portion métallique d'une autre cellule immédiatement voisine.

Dans un mode de réalisation, la batterie électrique présentée ci-dessus ne comprend pas de module électrique.

### Brève description des figures

D'autres caractéristiques et avantages de l'invention apparaitront au cours de la lecture de la description détaillée qui va suivre pour la compréhension de laquelle on se reportera aux dessins annexés dans lesquels :

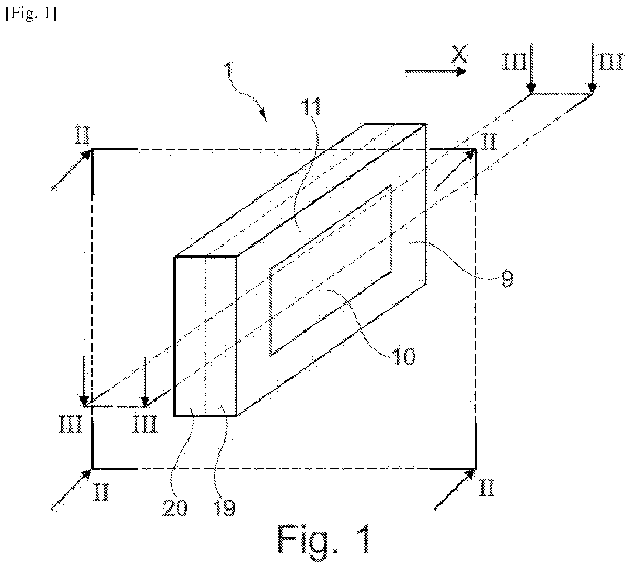

[Fig 1] la figure 1 est une représentation schématique d'une cellule selon l'invention ;
[Fig 2] la figure 2 est vue selon le plan de coupe II-II de la figure 1 ;
[Fig 3] la figure 3 est vue selon le plan de coupe III-III de la figure 1 ;
[Fig 4] la figure 4 est une représentation schématique d'une batterie comprenant des cellules selon l'invention.

### Description détaillée de l'invention

Sur les dessins, est représentée une cellule 1 électrique. Les cellules 1 électriques sont destinées à être intégrées dans un véhicule électrique.

La cellule 1 comprend un sachet 2 souple. La cellule 1 comporte plusieurs électrodes 3, 4 positives et négatives séparées les unes des autres par un film 5 séparateur poreux. Les électrodes 3, 4 et les films 4 séparateurs forment ensemble un empilage 6 d'électrodes.

L'empilage 6 d'électrodes est agencé dans le sachet 2 souple. Ainsi, le sachet 2 souple enveloppe l'empilage 6 d'électrodes.

La cellule 1 comprend un électrolyte qui est agencé dans le sachet 2 souple.

Le sachet 2 souple est hermétique. Par « hermétique », il est entendu que le sachet 2 souple est étanche en ce qu'il permet d'isoler l'empilage 6 d'électrodes et l'électrolyte. Ainsi aucune fuite d'électrolyte en dehors du sachet 2 souple n'est possible et aucune contamination extérieure ne peut entrer dans le sachet 2 souple.

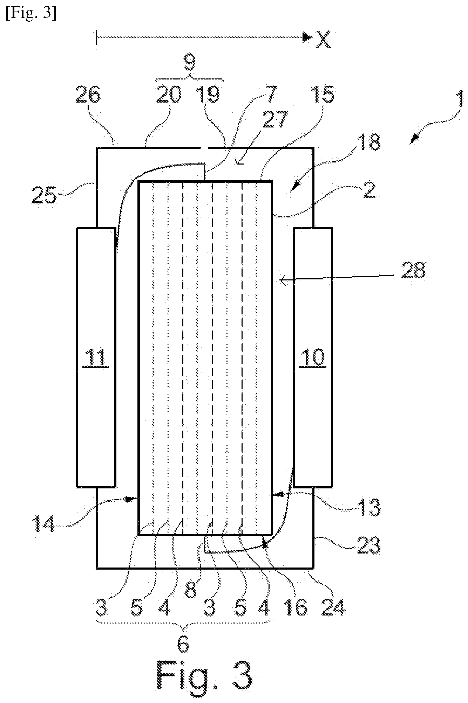

La cellule 1 comprend un premier terminal 7 connecté électriquement aux électrodes 3 positives. La cellule 1 comprend un deuxième terminal 8 connecté électriquement aux électrodes 4 négatives. Ainsi qu'on peut le voir sur la figure 3, le premier terminal 7 et le deuxième terminal 8 font saillie du sachet 2 souple.

La cellule 1 comprend une coque 9 extérieure rigide. Le sachet 2 souple est agencé dans la coque 9 extérieure.

La coque 9 extérieure comprend une première portion 10 métallique connectée électriquement au premier terminal 7. La coque 9 extérieure comprend une deuxième portion 11 métallique connectée au deuxième terminal 8. La première portion 10 métallique et la deuxième portion 11 métallique sont isolées électriquement l'une de l'autre.

Les cellules 1 peuvent être directement agencées dans une batterie 12, les unes à côté des autres. Grâce aux terminaux 7,8 les cellules sont interconnectées peuvent être interconnectées entre elles dans une batterie. Ainsi il n'est plus nécessaire d'utiliser des éléments métalliques rapportés pour interconnecter les cellules 1. Il peut y avoir une exception pour les cellules qui se situent à des extrémités de la batterie 12.

Ainsi cette cellule 1 permet de s'affranchir des modules.

La coque 9 extérieure rigide permet de protéger le sachet souple et confère des dimensions précises à la cellule 1 ce qui facilite la fabrication de la batterie. De plus la coque 9 extérieure confère de la rigidité structurelle à la batterie 1 électrique et donc à la voiture électrique. En effet, la batterie électrique fait en général partie intégrante du châssis du véhicule électrique et participe à la tenue mécanique de la structure.

La batterie 12 est plus légère, un plus grand nombre de cellules 1 peuvent être agencées dans celle-ci, la batterie 12 est plus facile à fabriquer notamment en réduisant le nombre d'opérations et la performance globale de la batterie 12 et du véhicule sont améliorés. Le coût de fabrication est par ailleurs réduit.

En outre, lorsqu'une cellule est défectueuse, il est plus simple de ne remplacer que ladite cellule défectueuse.

Par ailleurs le recyclage est amélioré, car le nombre de soudures susceptibles de provoquer des mélanges de métaux est significativement réduit. Ce recyclage facilité permet en plus d'obtenir des taux de pureté plus élevés.

Avantageusement, l'empilage 6 d'électrodes comprend des électrodes 3, 4 distinctes les unes des autres. Par « distincte », il est entendu que les électrodes 3, 4 sont découpées pour former des portions. Une fois découpées, les électrodes 3, 4 sont empilées les unes sur les autres, selon un axe X d'empilage, en les séparant les unes des autres par un film 5 séparateur poreux, pour former l'empilage 6 d'électrodes.

Ces cellules 1 conviennent particulièrement à un usage dans les véhicules automobiles électriques.

Avantageusement, l'empilage 6 d'électrode présente une forme sensiblement parallélépipédique. L'empilage 6 comporte une première face 13 une deuxième face 14 opposée à la première face 13 ainsi que quatre tranches 15, 16, 17 latérales reliant la première face 13 à la deuxième face 14. Les tranches 15,16,17 s'étendent selon l'axe X d'empilage. Au contraire, la première face 13 et la deuxième face 14 ne s'étendent pas selon l'axe X d'empilage.

La première face 13 présente une surface sensiblement identique à la deuxième face 14. Chaque tranche présente une surface sensiblement identique. La surface de la première face 13 ou de la deuxième face 14 est supérieure à la surface de l'une quelconque des tranches 15, 16, 17 latérales.

Le premier terminal 7 fait saillie d'une première tranche 15 et le deuxième terminal 8 fait saillie d'une deuxième tranche 16 opposée à la première tranche 15.

La première portion 10 métallique est agencée en regard de la première face 13 et la deuxième portion 11 métallique est agencée en regard de la deuxième face 14.

Ainsi les cellules 1 peuvent être connectées électriquement les unes aux autres dans la batterie par mise en contact de leur plus grande surface. Ceci apporte stabilité et robustesse mécanique à l'ensemble et facilite l'assemblage des cellules 1 dans la batterie 12.

Avantageusement, la coque 9 extérieure comporte un logement 18. L'empilage 6 d'électrodes est agencé dans le logement 18. Le logement 18 présente une forme qui est sensiblement une contre-empreinte de l'empilage 6 d'électrodes.

Cela permet d'éviter que l'empilage 6 d'électrodes ne bouge dans la cellule 1. Au cours de la fabrication de la cellule 1, l'assemblage est facilité.

Avantageusement, la coque 9 extérieure comprend une première partie 19 et une deuxième partie 20 distincte de la première partie 19. La première partie 19 comprend la première portion 10 métallique, et la deuxième partie 20 comprend la deuxième portion 11 métallique.

La première partie 19 comprend des premiers moyens 21 de fixation et la deuxième partie 20 comprend des deuxièmes moyens 22 de fixation destinés à coopérer avec les premiers moyens 21 de fixation pour encapsuler l'empilage 6 d'électrodes.

Les premiers moyens 21 de fixation se présentent par exemple sous la forme de pattes d'encastrement et les deuxièmes moyens 22 de fixation sont des orifices aptes à recevoir les pattes d'encastrement.

Une telle architecture permet un assemblage simplifié de la première partie 19 et de la deuxième partie 20.

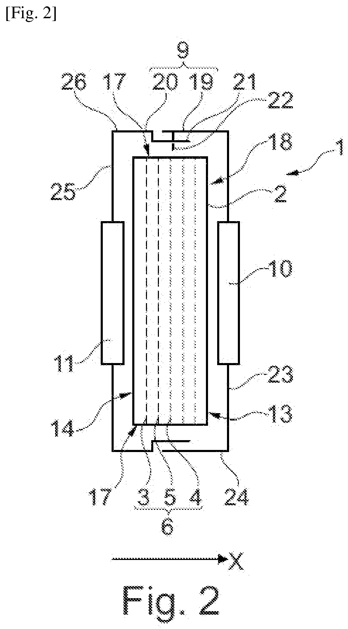

Ainsi qu'on peut le voir sur la figure 2, la première partie 19 et la deuxième partie 20 de la coque 9 extérieure présentent en section une forme de U à fond plat.

En variante, la première partie 19 et la deuxième partie 20 de la coque 9 extérieure peuvent présenter en section une forme de V à fond plat.

Ces formes sont simples à fabriquer et confèrent une bonne tenue mécanique à la coque 9 extérieure.

Avantageusement la première partie 19 comprend une première paroi 23 principale et une première jupe 24 formant un angle avec la première paroi 23 principale. La première portion 10 métallique est agencée sur la première paroi 23 principale.

La deuxième partie comprend une deuxième paroi 25 principale et une deuxième jupe 26 formant un angle avec la deuxième paroi 25 principale. La deuxième portion 11 métallique est agencée sur la deuxième paroi 25 principale.

La première jupe 24 comprend les premiers moyens 21 de fixation. La deuxième jupe 26 comprend les deuxièmes moyens 22 de fixation.

Dans le mode de réalisation représenté sur les dessins, la jupe 24, 26 forme avec la paroi 23, 25 principale un angle sensiblement droit.

Ces formes sont simples à fabriquer et confèrent une bonne tenue mécanique à la coque 9 extérieure.

Avantageusement, la cellule 1 comprend une pâte thermique (non représentée sur les dessins). La pâte thermique est agencée dans un premier espace 27 situé entre une tranche 15,16, 17 latérale de l'empilage 6 d'électrodes et la coque 9 extérieure. La pâte thermique est en contact avec la tranche 15,16, 17 latérale d'une part et avec la coque 9 extérieure d'autre part.

Ainsi il devient possible par refroidissement de la coque 9 extérieure de refroidir l'empilage 6 d'électrode, en particulier au niveau de la tranche 15,16, 17 latérale. Un refroidissement au niveau de la tranche 15,16, 17 latérale permet une gestion thermique fine et précise de la cellule 1. En effet, au niveau de la tranche 15,16, 17 latérale, il devient possible de gérer thermiquement toutes les électrodes 3, 4.

Avantageusement, les tranches 15,16, 17 latérales sont agencées en regarde de la jupe 24, 26 de la coque 9 extérieure.

La jupe 24, 26 est la partie de la coque 9 extérieure la plus accessible pour une gestion thermique dans la batterie. Les parois 23, 25 principales des cellules 1 étant en contact intimes les unes avec les autres, il est plus aisé de réaliser une gestion thermique au niveau de la jupe 24, 26.

Avantageusement, la jupe 24, 26 et la paroi 23, 25 principale sont fabriquées dans un matériau électrique isolant.

Ceci permet d'isoler électriquement la première portion 10 métallique et la deuxième portion 11 métallique l'une de l'autre sans ajout d'éléments isolants supplémentaires. Il en résulte avantageusement une simplification de la structure de la cellule 1 électrique.

Avantageusement, la jupe 24, 26 est fabriquée dans un matériau conducteur thermique.

Ceci permet une bonne gestion thermique de l'empilage 6 d'électrode.

Avantageusement, la paroi 23, 25 principale et la jupe 24, 26 de chaque partie 19, 20 sont fabriquées d'un seul tenant.

Ainsi il est possible de les fabriquer à faible coût, simplement et grande série, notamment par moulage.

Avantageusement la première portion 10 métallique est fabriquée par surmoulage sur la première partie 19. La deuxième portion 11 métallique est fabriquée surmoulage sur la deuxième partie 20.

Ainsi, la coque 9 extérieure est particulièrement robuste.

Avantageusement, la cellule comprend un élément d'isolation thermique. L'élément d'isolation thermique est agencé à l'intérieur de la coque 9 extérieure. L'élément d'isolation thermique est agencé dans un deuxième espace 28 situé entre la première paroi 23 principale et la première face 13 du sachet 2 souple. L'élément d'isolation thermique est ainsi apte et destiné à isoler thermiquement le sachet 2 souple de la coque 9 extérieure. De manière plus précise, l'élément d'isolation thermique permet d'isoler thermiquement la première face 13 de la première paroi 23 principale.

Dans une variante de réalisation, l'élément d'isolation thermique peut être agencé entre la deuxième face 14 du sachet 2 souple et la deuxième paroi 25 principale.

Avantageusement, l'élément isolant thermique est agencé entre la paroi 23 principale et le sachet 2 souple. En variante, l'élément isolant thermique est agencé entre la paroi 25 principale et le sachet 2 souple.

L'isolant thermique ainsi positionné permet d'isoler thermiquement chaque cellule. Dans la batterie 12, il devient possible de mettre les cellules directement en contact les unes des autres sans que la température de chacune n'ait un impact significatif sur celles immédiatement voisines. Il devient alors possible d'améliorer la gestion thermique de chaque cellule.

L'élément isolant thermique est par exemple un aérogel, du liège ou encore du mica. D'autres matériaux peuvent être utilisés.

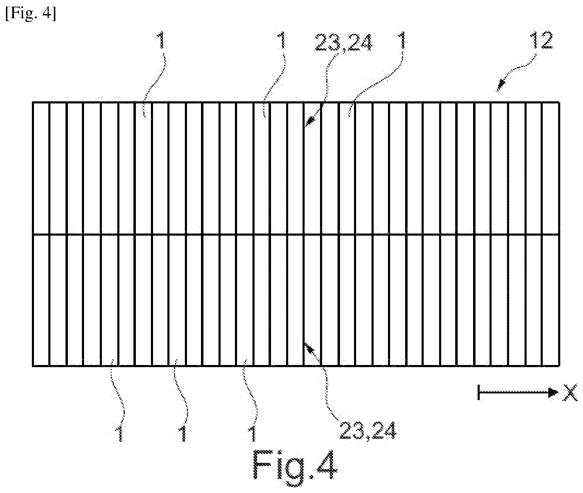

Sur la figure 4, est représentée une batterie 12 comprenant des cellules 1 précédemment décrites. Les cellules 1 sont agencées les unes à côté des autres. Ainsi la première portion 10 métallique d'une cellule 1 donnée est en contact direct avec la deuxième portion 11 métallique d'une autre cellule 1 immédiatement voisine.

Comme on peut le voir, une batterie 12 de véhicule électrique est fabriquée directement à partir de cellules 1 et ceci sans aucun module électrique.

## Revendications

1. Cellule (1) électrique comprenant :
- un sachet (2) souple hermétique,
- une pluralité d'électrodes (3, 4) positives et négatives séparées les unes des autres par un film (5) séparateur poreux de sorte à former un empilage (6) d'électrodes, ledit empilage (6) d'électrode étant enveloppé dans le sachet (2) souple,
- un électrolyte agencé dans le sachet (2) souple,
- un premier terminal (7) connecté aux électrodes (3) positives et un deuxième terminal (8) connecté aux électrodes (4) négatives, lesdits premier et deuxième terminaux (8, 9) faisant saillie du sachet (2) souple,
la cellule (1) comprenant une coque (9) extérieure rigide dans laquelle est agencé le sachet (2) souple, ladite coque (9) extérieure comprenant :
- une première partie (19) et une deuxième partie (20) distincte de la première partie (19), la première partie (19) comprenant une première paroi (23) principale et une première jupe (24) formant un angle avec la première paroi (23) principale, la deuxième partie (20) comprenant une deuxième paroi (25) principale et une deuxième jupe (26) formant un angle avec la deuxième paroi (25) principale;
- une première portion (10) métallique connectée au premier terminal (7), cette première portion (10) métallique étant agencée sur ladite première paroi (23) principale;
- une deuxième portion (11) métallique connectée au deuxième terminal (8), cette deuxième portion (11) métallique étant agencée sur ladite deuxième paroi (25) principale;
cellule (1) dans laquelle chacune de la première jupe (24) et de la deuxième jupe (26) est fabriquée dans un matériau isolant électriquement de sorte que la première portion (10) métallique et la deuxième portion (11) métallique soient isolées électriquement l'une de l'autre.

2. Cellule (1) électrique selon la revendication 1 dans laquelle, les électrodes (3, 4) sont distinctes les unes des autres et lesdites électrodes (3, 4) sont séparées les unes des autres par un film (5) séparateur poreux, lesdites électrodes (3, 4) étant empilées selon un axe (X) d'empilement.

3. Cellule (1) électrique selon la revendication 2 dans laquelle, l'empilage (6) d'électrodes présente une forme sensiblement parallélépipédique, ledit empilage (6) ayant une première face (13) et une deuxième face (14) opposée à la première face (13) et quatre tranches (15, 16, 17) latérales reliant la première face (13) à la deuxième face (14) et qui s'étendent latéralement selon l'axe (X) d'empilage, lesdites première et deuxième face (13, 14) présentant chacune une surface supérieure à la surface de chacune des tranches (15, 16, 17) prises individuellement, le premier terminal (7) faisant saillie d'une première tranche (15) et le deuxième terminal (8) faisant saillie d'une deuxième tranche (16) opposée à la première tranche (15), cellule (1) dans laquelle la première portion (10) métallique est agencée en regard de la première face (13) et la deuxième portion (11) métallique est agencée en regard de la deuxième face (14).

4. Cellule (1) électrique selon l'une quelconque des revendications précédentes dans laquelle, la coque (9) extérieure comporte un logement (18) dans lequel est agencé l'empilage (6) d'électrodes.

5. Cellule (1) électrique selon la revendication 4 dans laquelle,
- la première partie (19) comprend des premiers moyens (21) de fixation,
- la deuxième partie (20) comprend des deuxièmes moyens (22) de fixation destinés à coopérer avec les premiers moyens (21) de fixation de sorte à encapsuler le sachet (2) souple comprenant l'empilage (6) d'électrodes.

6. Cellule (1) électrique selon l'une quelconque des revendications précédentes dans laquelle, la première partie (19) et la deuxième partie (20) de la coque (9) extérieure présentent en section sensiblement une forme de U ou de V à fond plat.

7. Cellule (1) électrique selon la revendication 5 dans laquelle, la première jupe (24) comporte les premiers moyens (21) de fixation, et la deuxième jupe (26) comporte les deuxièmes moyens (22) de fixation.

8. Cellule électrique selon la revendication 3 ou l'une des revendications 4 à 7 dépendantes en outre de la revendication 3 dans laquelle, celle-ci comprend une pâte thermique agencée dans un premier espace (27) situé entre une tranche (15, 16, 17) et la coque (9) extérieure, ladite pâte thermique étant en contact avec ladite au moins une tranche (15, 16, 17) et ladite coque (9) extérieure.

9. Cellule (1) électrique selon la revendication 8 dans laquelle, les tranches (15, 16, 17) de l'empilage (6) d'électrodes sont agencées sensiblement en regard de la première et la deuxième jupe (24, 26) de la coque (9) extérieure.

10. Cellule (1) électrique selon l'une quelconque des revendications précédentes dans laquelle, chacune de la première jupe (24) et de la deuxième jupe (26) est fabriquée dans un matériau conducteur thermique.

11. Cellule (1) électrique selon l'une quelconque des revendications précédentes dans laquelle, la jupe (24, 26) et la paroi (23, 25) principale respectivement de la première partie (19) et de la deuxième partie (20) sont fabriquées d'un seul tenant.

12. Cellule (1) électrique selon la revendication précédente dans laquelle, la première partie (19) et la deuxième partie (20) de la coque (9) extérieure sont fabriquées par surmoulage respectivement sur la première portion (10) métallique et sur la deuxième portion (11) métallique.

13. Cellule (1) électrique selon l'une quelconque des revendications précédentes, celle-ci comprend un élément isolant thermique agencé à l'intérieur de la coque (9) extérieure, ledit élément isolant thermique étant apte à isoler thermiquement le sachet (2) souple de la coque (9) extérieure.

14. Cellule (1) électrique selon la revendication précédente dans laquelle, l'élément isolant thermique est agencé entre au moins une paroi (23, 25) principale et le sachet (2) souple.

15. Batterie (12) électrique comprenant une pluralité de cellules (1) selon l'une quelconque des revendications précédentes, lesdites cellules (1) étant agencées les unes à côté des autres de sorte que la première portion (10) métallique d'une cellule (1) donnée est en contact direct avec la deuxième portion (11) métallique d'une autre cellule (1) immédiatement voisine.

## Patentansprüche

1. Elektrische Zelle (1), umfassend:
- einen flexiblen, hermetischen Beutel (2),
- eine Vielzahl von positiven und negativen Elektroden (3, 4), die durch eine poröse Trennfolie (5) voneinander getrennt sind, um einen Elektrodenstapel (6) zu bilden, wobei der Elektrodenstapel (6) in dem flexiblen Beutel (2) umhüllt ist,
- einen im flexiblen Beutel (2) angeordneten Elektrolyt,
- einen ersten Anschluss (7), der mit den positiven Elektroden (3) verbunden ist, und einen zweiten Anschluss (8), der mit den negativen Elektroden (4) verbunden ist, wobei der erste und der zweite Anschluss (8, 9) aus dem flexiblen Beutel (2) herausragen,
wobei die Zelle (1) eine starre Außenhülle (9) umfasst, in welcher der flexible Beutel (2) angeordnet ist, wobei die Außenhülle (9) umfasst:
- einen ersten Teil (19) und einen zweiten Teil (20), der von dem ersten Teil (19) verschieden ist, wobei der erste Teil (19) eine erste Hauptwand (23) und eine erste Schürze (24) umfasst, die einen Winkel mit der ersten Hauptwand (23) bildet, wobei der zweite Teil (20) eine zweite Hauptwand (25) und eine zweite Schürze (26) umfasst, die einen Winkel mit der zweiten Hauptwand (25) bildet;
- einen ersten metallischen Abschnitt (10), der mit dem ersten Anschluss (7) verbunden ist, wobei dieser erste metallische Abschnitt (10) an der ersten Hauptwand (23) angeordnet ist;
- einen zweiten metallischen Abschnitt (11), der mit dem zweiten Anschluss (8) verbunden ist, wobei dieser zweite metallische Abschnitt (11) an der zweiten Hauptwand (25) angeordnet ist;
Zelle (1), in der die erste Schürze (24) und die zweite Schürze (26) jeweils aus einem elektrisch isolierenden Material hergestellt sind, derart, dass der erste metallische Abschnitt (10) und der zweite metallische Abschnitt (11) elektrisch voneinander isoliert sind.

2. Elektrische Zelle (1) nach Anspruch 1, wobei die Elektroden (3, 4) voneinander verschieden sind und die Elektroden (3, 4) durch eine poröse Trennfolie (5) voneinander getrennt sind, wobei die Elektroden (3, 4) entlang einer Stapelachse (X) gestapelt sind.

3. Elektrische Zelle (1) nach Anspruch 2, wobei der Elektrodenstapel (6) eine im Wesentlichen paralleleipipedische Form aufweist, wobei der Elektrodenstapel (6) eine erste Seite (13) und eine der ersten Seite (13) gegenüberliegende zweite Seite (14) und vier seitliche Kanten (15, 16, 17) aufweist, die die erste Seite (13) mit der zweiten Seite (14) verbinden und die sich seitlich entlang der Stapelachse (X) erstrecken, wobei die erste und die zweite Seite (13, 14) einzeln betrachtet jeweils eine größere Fläche aufweisen als die Fläche jeder der Kanten (15, 16, 17), wobei der erste Anschluss (7) aus einer ersten Kante (15) herausragt und der zweite Anschluss (8) aus einer zweiten Kante (16) herausragt, die der ersten Kante (15) gegenüberliegt, Zelle (1), wobei der erste metallische Abschnitt (10) gegenüber der ersten Seite (13) und der zweite metallische Abschnitt (11) gegenüber der zweiten Seite (14) angeordnet ist.

4. Elektrische Zelle (1) nach einem der vorstehenden Ansprüche, wobei die Außenhülle (9) eine Aufnahme (18) aufweist, in welcher der Elektrodenstapel (6) angeordnet ist.

5. Elektrische Zelle (1) nach Anspruch 4, wobei
- der erste Teil (19) erste Befestigungsmittel (21) umfasst,
- der zweite Teil (20) zweite Befestigungsmittel (22) umfasst, die dazu bestimmt sind, mit den ersten Befestigungsmitteln (21) zusammenzuwirken, um den flexiblen Beutel (2) einzukapseln, der den Elektrodenstapel (6) umfasst.

6. Elektrische Zelle (1) nach einem der vorstehenden Ansprüche, wobei der erste Teil (19) und der zweite Teil (20) der Außenhülle (9) im Querschnitt im Wesentlichen eine U- oder V-Form mit flachem Boden aufweisen.

7. Elektrische Zelle (1) nach Anspruch 5, wobei die erste Schürze (24) die ersten Befestigungsmittel (21) aufweist und die zweite Schürze (26) die zweiten Befestigungsmittel (22) aufweist.

8. Elektrische Zelle nach Anspruch 3 oder einem der Ansprüche 4 bis 7, die ferner von Anspruch 3 abhängig sind, wobei diese eine Wärmeleitpaste umfasst, die in einem ersten Raum (27) angeordnet ist, der sich zwischen einer Kante (15, 16, 17) und der Außenhülle (9) befindet, wobei die Wärmeleitpaste in Kontakt mit der mindestens einen Kante (15, 16, 17) und der Außenhülle (9) steht.

9. Elektrische Zelle (1) nach Anspruch 8, wobei die Kanten (15, 16, 17) des Elektrodenstapels (6) im Wesentlichen gegenüber der ersten und der zweiten Schürze (24, 26) der Außenhülle (9) angeordnet sind.

10. Elektrische Zelle (1) nach einem der vorstehenden Ansprüche, wobei die erste Schürze (24) und die zweite Schürze (26) jeweils aus einem wärmeleitenden Material hergestellt sind.

11. Elektrische Zelle (1) nach einem der vorstehenden Ansprüche, wobei die Schürze (24, 26) und die Hauptwand (23, 25) des ersten Teils (19) bzw. des zweiten Teils (20) einstückig hergestellt sind.

12. Elektrische Zelle (1) nach dem vorstehenden Anspruch, wobei der erste Teil (19) und der zweite Teil (20) der Außenhülle (9) durch Umspritzen jeweils auf dem ersten metallischen Abschnitt (10) und auf dem zweiten metallischen Abschnitt (11) hergestellt sind.

13. Elektrische Zelle (1) nach einem der vorstehenden Ansprüche, wobei diese ein wärmeisolierendes Element umfasst, das im Inneren der Außenhülle (9) angeordnet ist, wobei das wärmeisolierende Element geeignet ist, den flexiblen Beutel (2) von der Außenhülle (9) thermisch zu isolieren.

14. Elektrische Zelle (1) nach dem vorstehenden Anspruch, wobei das wärmeisolierende Element zwischen mindestens einer Hauptwand (23, 25) und dem flexiblen Beutel (2) angeordnet ist.

15. Elektrische Batterie (12), umfassend eine Vielzahl von Zellen (1) nach einem der vorstehenden Ansprüche, wobei die Zellen (1) derart nebeneinander angeordnet sind, dass der erste metallische Abschnitt (10) einer gegebenen Zelle (1) in direktem Kontakt mit dem zweiten metallischen Abschnitt (11) einer anderen, unmittelbar benachbarten Zelle (1) steht.

## Claims

1. Electric cell (1) comprising:
- a flexible, airtight pouch (2),
- a plurality of positive and negative electrodes (3, 4) separated from one another by a porous separating film (5) so as to form a stack (6) of electrodes, said electrode stack (6) being enclosed in the flexible pouch (2),
- an electrolyte arranged in the flexible pouch (2),
- a first terminal (7) connected to the positive electrodes (3) and a second terminal (8) connected to the negative electrodes (4), said first terminal and said second terminal (8, 9) projecting from the flexible pouch (2),
the cell (1) comprising a rigid outer shell (9) in which the flexible pouch (2) is arranged, said outer shell (9) comprising:
- a first part (19) and a second part (20) which is separate from the first part (19), the first part (19) comprising a first main wall (23) and a first skirt (24) forming an angle with the first main wall (23), the second part (20) comprising a second main wall (25) and a second skirt (26) forming an angle with the second main wall (25);
- a first metal portion (10) connected to the first terminal (7), this first metal portion (10) being arranged on said first main wall (23);
- a second metal portion (11) connected to the second terminal (8), this second metal portion (11) being arranged on said second main wall (25);
cell (1) wherein the first skirt (24) and the second skirt (26) are each manufactured from an electrically insulating material so that the first metal portion (10) and the second metal portion (11) are electrically insulated from one another.

2. Electric cell (1) according to claim 1, wherein the electrodes (3, 4) are separate from one another, and said electrodes (3, 4) are separated from one another by a porous separating film (5), said electrodes (3, 4) being stacked along a stacking axis (X).

3. Electric cell (1) according to claim 2, wherein the electrode stack (6) has a substantially parallelepiped shape, said stack (6) having a first face (13) and a second face (14) which is opposite the first face (13), and having four side edges (15, 16, 17) connecting the first face (13) to the second face (14) and extending laterally along the stacking axis (X), said first face and said second face (13, 14) each having a surface area greater than the surface area of each of the edges (15, 16, 17) taken individually, the first terminal (7) projecting from a first edge (15) and the second terminal (8) projecting from a second edge (16) which is opposite the first edge (15), cell (1) wherein the first metal portion (10) is arranged opposite the first face (13) and the second metal portion (11) is arranged opposite the second face (14).

4. Electric cell (1) according to any of the preceding claims, wherein the outer shell (9) comprises a recess (18) in which the electrode stack (6) is arranged.

5. Electric cell (1) according to claim 4, wherein
- the first part (19) comprises first fastening means (21),
- the second part (20) comprises second fastening means (22) intended to cooperate with the first fastening means (21) so as to encapsulate the flexible pouch (2) comprising the electrode stack (6).

6. Electric cell (1) according to any of the preceding claims, wherein the first part (19) and the second part (20) of the outer shell (9) have a substantially U-shaped or V-shaped cross section having a flat bottom.

7. Electric cell (1) according to claim 5, wherein the first skirt (24) comprises the first fastening means (21), and the second skirt (26) comprises the second fastening means (22).

8. Electric cell according to claim 3 or any of claims 4 to 7, when also further dependent on claim 3, wherein the cell comprises a thermal paste arranged in a first space (27) located between an edge (15, 16, 17) and the outer shell (9), said thermal paste being in contact with said at least one edge (15, 16, 17) and said outer shell (9).

9. Electric cell (1) according to claim 8, wherein the edges (15, 16, 17) of the electrode stack (6) are arranged substantially opposite the first skirt and the second skirt (24, 26) of the outer shell (9).

10. Electric cell (1) according to any of the preceding claims, wherein the first skirt (24) and the second skirt (26) are each manufactured from a thermally conductive material.

11. Electric cell (1) according to any of the preceding claims, wherein the skirt (24, 26) and the main wall (23, 25) of the first part (19) and of the second part (20), respectively, are manufactured in a single piece.

12. Electric cell (1) according to the preceding claim, wherein the first part (19) and the second part (20) of the outer shell (9) are manufactured by overmolding on the first metal portion (10) and on the second metal portion (11), respectively.

13. Electric cell (1) according to any of the preceding claims, comprising a thermal insulation element arranged inside the outer shell (9), said thermal insulation element being capable of thermally insulating the flexible pouch (2) from the outer shell (9).

14. Electric cell (1) according to the preceding claim, wherein the thermal insulation element is arranged between at least one main wall (23, 25) and the flexible pouch (2).

15. Electric battery (12) comprising a plurality of cells (1) according to any of the preceding claims, said cells (1) being arranged side by side so that the first metal portion (10) of a given cell (1) is in direct contact with the second metal portion (11) of another immediately adjacent cell (1).
